# EUROPÄISCHE PATENTSCHRIFT

(11) **EP 0 939 986 B1**
(45) Veröffentlichungstag und Bekanntmachung des Hinweises auf die Patenterteilung: **14.02.2001**
(21) Anmeldenummer: 97950128.5
(22) Anmeldetag: 06.11.1997
(51) Int. Cl.: H02B 1/30, H02B 1/01

(54) **SCHALTSCHRANK MIT EINEM RAHMENGESTELL**
SWITCHING CABINET WITH A RACK
ARMOIRE DE DISTRIBUTION COMPORTANT UNE BAIE

(30) Priorität: 19.11.1996 DE 19647790
(43) Veröffentlichungstag der Anmeldung: 08.09.1999
(73) Patentinhaber: Rittal-Werk Rudolf Loh GmbH & Co. KG, 35745 Herborn (DE)
(72) Erfinder: BENNER, Rolf, D-35745 Herborn (DE); KÖHLER, Martina, D-35745 Herborn (DE); MÜNCH, Udo, D-35764 Sinn (DE); REUTER, Wolfgang, D-57299 Burbach 5 (DE)
(74) Vertreter: Fleck, Hermann-Josef, Dr.-Ing.
(86) Internationale Anmeldenummer: EP9706154
(87) Internationale Veröffentlichungsnummer: WO9823010

(56) Entgegenhaltungen:
- EP-A- 0 649 205
- DE-A- 1 938 879
- DE-U- 8 300 044
- FR-A- 2 681 403
- GB-A- 2 231 117

## Beschreibung

Die Erfindung betrifft ein Schaltschrank mit einem Rahmengestell, das einen aus Längs- und Tiefenstreben zusammengesetzten Sockel und an diesen angeschlossene vertikale Rahmenschenkel aufweist, wobei die Längs- und Tiefenstreben an ihren Enden eine Aufnahme bilden, in die die vertikalen Rahmenschenkel eingesetzt und mit dem Sockel zu einer Eckverbindung verschweißt sind, wobei die vertikalen Rahmenschenkel Zentrierflächen aufweisen, die an Anschlägen der Längs- und Tiefenstreben ausgerichtet sind. Die DE-U-8 300 044 offenbart einen derartigen Schaltschrank.

An den Zentrierflächen kann der vertikale Rahmenschenkel entlang der Anschläge in Position gebracht werden. Die Zentrierflächen bilden zusammen mit den Anschlägen eine Zwangsführung für den vertikalen Rahmenschenkel, die die Positionierung der zu verbindenden Teile während des Schweißvorganges aufrechterhält. Mit dieser einfachen Maßnahme kann auch auf zusätzliche Eckverbinderelemente zur Ausrichtung des vertikalen Rahmenschenkels verzichtet werden, so daß das Rahmengestell einfach aufgebaut ist.

Ein solcher Schaltschrank ist auch aus der DE 19 04 558 bekannt. Bei derartigen Schaltschränken ist auf einen separaten Eckverbinder verzichtet, so daß die einzelnen vertikalen Rahmenschenkel und Längs- bzw. Tiefenstreben direkt miteinander verschweißt sind. Die Längs- und die Tiefenstreben sind als Winkelprofile ausgebildet. Die Tiefenstrebe ist mit ihrer planen Stirnseite stumpf auf einen Schenkel der Längsstrebe gestoßen und hier angeschweißt.

An den so gebildeten Sockel kann dann der ebenfalls aus zwei Schenkeln zusammengesetzte, als Winkelprofil ausgebildete vertikale Rahmenschenkel angebunden werden. Hierzu ist einer der Schenkel stirnseitig ausgeklinkt. Damit verbleibt von dem zweiten Schenkel stirnseitig ein Lappen, an dem die Längsstrebe des Sockels mit ihrer Stirnseite anschlägt.

Bei dieser Art der Eckverbindung ist es schwierig, den vertikalen Rahmenschenkel an dem Sockel so auszurichten, daß er zum einen einfach und präzise festgeschweißt und zum anderen exakt positioniert ist. Aus diesem Grunde ist es in der WO 90/15464 vorgeschlagen, ein Zusatzelement zu verwenden. Dieses wird an der Tiefenstrebe festgemacht, so daß die Längsstrebe der vertikale Rahmenschenkel in Position gebracht werden können. Bei dieser Eckverbindung ist wieder ein zusätzliches Teil notwendig, was einen entsprechend höheren Aufwand verursacht.

Aus der GB-A-2 311 17 lassen sich die vertikalen Rahmenschenkel mit zwei vertikal zueinanderstehenden Profilseiten an diesen stirnseiten anlegen und über eine klemmplatte mit dem Boden- und Deckrahmen verschrauben.

Es ist Aufgabe der Erfindung einen Schaltschrank der eingangs erwähnten Art zu schaffen, bei dem die Eckverbindung am Rahmengestell einfach aufgebaut und eine exakte Ausrichtung des vertikalen Rahmenschenkels ermöglicht ist.

Diese Aufgabe der Erfindung wird dadurch gelöst, daß in vertikaler Richtung beabstandet von den Anschlägen an den Längs- und Tiefenstreben Stege angeordnet sind, an denen sich der vertikale Rahmenschenkel an seiner stirnseitigen Stoßfläche abstützt, und daß der vertikale Rahmenschenkel an der Stoßfläche und an den Zentrierflächen mit den Längs- und Tiefenstreben verschweißt ist. Dann ist eine stabile Anlenkung des vertikalen Rahmenschenkels möglich.

Dadurch, daß die Stoßfläche beabstandet zu den Anschlägen angeordnet ist, können hohe Momentenbelastungen in den vertikalen Rahmenschenkel eingebracht werden.

Nach einer Ausgestaltung der Erfindung ist vorgesehen, daß die Zentrierflächen des vertikalen Rahmenschenkels senkrecht zu den jeweils zugeordneten Seitenflächen des Rahmengestelles ausgerichtet sind, und daß die Anschläge stegartig ausgebildet sind, zueinander im Winkel von 90° stehen und eine offene Aufnahme bilden.

In die Aufnahme kann der vertikale Rahmenschenkel von außen her in den Sockel eingesetzt werden. Die stegartigen Anschläge liegen hierbei an den Zentrierflächen an.

Nach einer weiteren Ausgestaltung der Erfindung ist vorgesehen, daß der vertikale Rahmenschenkel an seiner im Eckbereich nach außen weisenden Seite profiliert ist, und daß die Stege eine an diese Profilierung angepaßte Ausklinkung aufweisen.

In der Profilierung des Rahmenschenkels können verschiedenste Anbauten festgelegt werden. Beispielsweise können Scharnierelemente oder Schließungen für eine Tür angebracht sein, oder es können Abkantungen von angeschlossenen Seitenwänden aufgenommen werden. Mit den angepaßten Ausklinkungen in den Längs- bzw. Tiefenstreben sind störende Material-überstände die eine Verletzungsgefahr bilden würden, vermieden. Desweiteren kann der vertikale Rahmenschenkel an der angepaßten Ausklinkung so vorpositioniert werden, daß er eine genaue Ausrichtung erfährt.

Nach einer bevorzugten Ausgestaltung der Erfindung ist vorgesehen, daß an die Zentrierflächen Seitenteile des vertikalen Rahmenschenkels angeschlossen sind und daß die Seitenteile in den Anlagesteg zur Bildung eines geschlossenen Dicht- und/oder Anlagerahmens für eine Seitenwand, Schaltschranktür oder dgl. übergehen.

Dadurch das die Zentrierfläche an den Anschlägen ausgerichtet werden, ist auch das Seitenteil an den Anlagensteg angepaßt. Mit dem geschlossenen Dicht- und/oder Anlagerahmen kann dann ein Anbauelement beispielsweise abgedichtet festgelegt werden.

Nach einer weiteren Ausgestaltung der Erfindung ist vorgesehen, daß an den dem Sockel abgekehrten Ende der vertikalen Rahmenschenkel ein Deckelrahmen angeordnet ist, der in seiner Ausgestaltung dem Sockel entspricht. Die Erfindung wird im folgenden anhand eines in de Zeichnungen dargestellten Ausführungsbeispieles näher erläutert. Es zeigen:
- Fig. 1: in perpektivischer Explosionsdarstellung eine den Eckbereich eines Rahmengestelles darstellende Teilansicht,
- Fig. 2: die Darstellung gemäß Fig. 1 als Zusammenbau.

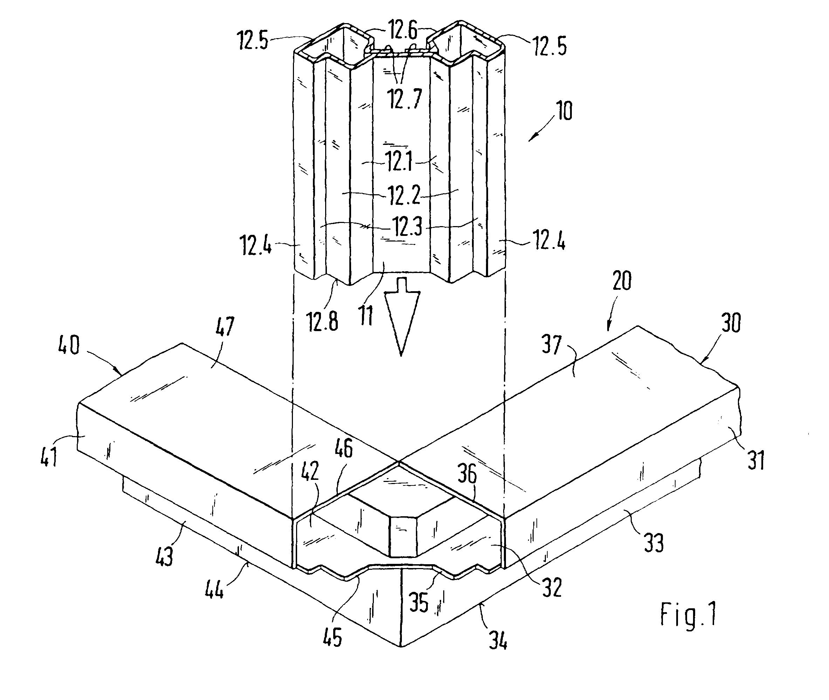

Die Fig. 1 zeigt einen Sockel 20, der aus Längs- und Tiefenstreben 30 und 40 zusammengesetzt ist. Die Längs- und Tiefenstreben weisen die gleiche Querschnittsgeometrie auf. Der gesamte Sockel 20 ist aus zwei Längs- und zwei Tiefenstreben 30 und 40 aufgebaut, die jeweils zueinander parallel ausgerichtet sind. Zur Herstellung des Sockels 20 wird ein einziges Stanz-Biegeteil verwendet, so daß die einzelnen Längs- und Tiefenstreben 30 und 40 einstückig miteinander verbunden sind. Die Längs- und Tiefenstreben 30 und 40 weisen ein horizontales Deckelteil 37,47 auf, an das sich ein um 90° nach unten abgekanteter Anlagesteg 31,41 anschließt.

Der Anlagesteg 31,41 dient zur Anlage beispielsweise einer Seitenwand oder einer Schranktür. Für die Abdichtung kann zwischen dem Seitenwandelement bzw. der Schranktür und dem Anlagesteg 31,41 ein Dichtelement eingesetzt sein. Von dem Anlagesteg 31,41 ist ein horizontaler Steg 32,42 rechtwinklig zurückgebogen. Dieser Steg 32,42 geht in die nach unten gerichtete Wand 33,43 über. In dem für den Steg 32,42 und der Wand 33,43 gebildeten Freiraum kann eine Abkantung des Wandelementes bzw. der Schranktür aufgenommen werden.

Die Wand 33,43 ist mit einem Bodenteil 34,44 abgeschlossen. Hier kann der Sockel 20 auf den Boden aufgestellt werden. An den stirnseitigen Enden sind die Längs- bzw. Tiefenstreben 30,40 an ihren Stegen 32,42 mit Ausklinkungen 35,45 versehen. Die Ausklinkungen 35,45 sind hierbei an die Außengeometrie eines vertikalen Rahmenschenkels 10 angepaßt ausgebildet. In vertikaler Richtung beabstandet von dem Steg 32,42 sind an den Deckelteilen 37,47 endseitig Anschläge 36,46 für Zentrierflächen 12.5 des vertikalen Rahmen-schenkels 10 angebracht.

Der vertikale Rahmenschenkel 10 weist einen Verbindungssteg 11 auf, von dem aus sich zu beiden Seiten Hohlkammern erstrecken. Zur Bildung der Hohlkammern ist der Blechzuschnitt für den vertikalen Rahmenschenkel 10 mehrfach abgekantet. Im einzelnen schließt sich an den Verbindungssteg 11 eine Abkantung 12.1 an, die über ein Übergangsstück 12.2 in eine Abwinklung 12.3 übergeht. Die Abwinklung 12.3 ist hierbei vertikal zu den zugeordneten Seitenwänden des Rahmengestelles angeordnet. An die Abwinklungen 12.3 schließen sich rechtwinklig Seitenteile 12.4 an. Die Seitenteile 12.4 dienen als Stützfläche für die Schranktür bzw. die Seitenwand. Zur Bildung der Zentrierflächen 12.5 sind die Seitenteile 12.4 rechtwinklig in Richtung zum Innenraum des Rahmengestelles hin abgebogen. Die Zentrierflächen 12.5 gehen rechtwinklig in Befestigungsabschnitte 12.6 über. Die Befestigungsabschnitte 12.6 stehen damit parallel zu den zugeordneten Seitenwänden des Rahmengestelles. Die Befestigungsabschnitte liegen über abgebogene Endstücke an dem Verbindungssteg 11 an, wo sie auch festgemacht werden.

Der vertikale Rahmenschenkel 10 wird in die nach außen offene Aufnahme des Sockels 20 eingeschoben. Hierbei gleitet die Zentrierflächen 12.5 an den Anschlägen 36,46 entlang. Mit seiner Stoßfläche 12.8 stößt der Rahmenschenkel 10 stirnseitig auf die Stege 32,42 des Sockels 20 auf. In dieser Position ist der vertikale Rahmenschenkel 10 an seinen Zentrierflächen 12.5 ausgerichtet. Damit sind auch die Befestigungsabschnitte 12.6 zum Innenraum des Rahmengestelles hin positioniert.

Die exakte vertikale Ausrichtung des Rahmenschenkels 10 ist mit der Ausklinkung 35,45 möglich. Da diese an die Außengeometrie des vertikalen Rahmenschenkels 10 angepaßt ist, kann er hier bündig angelegt werden.

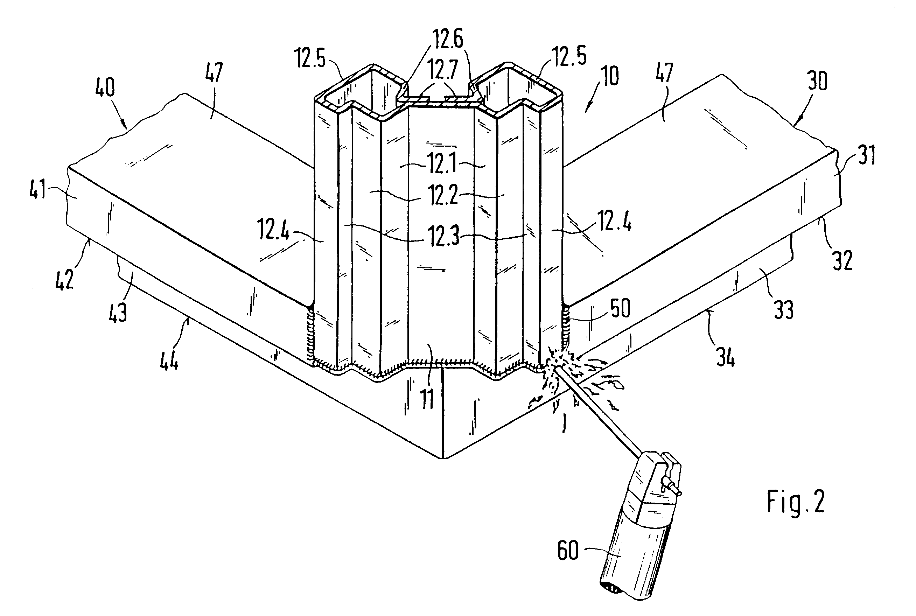

Diese Einbausituation ist in Fig. 2 näher dargestellt. Zur abschließenden Befestigung wird der vertikale Rahmenschenkel 10 an den Sockel 20 angeschweißt. Die hierbei gebildete Schweißnaht 50 verläuft entlang der Anschläge 36,46 über den Anlagesteg 31,41 zu den Ausklinkungen 35,45.

Wie aus Fig. 2 ersichtlich ist, bildet sich mit den Seitenteilen 12.4 und den Anlagestegen 31,41 jeweils ein umlaufender Dicht- und/oder Anlagerahmen.

## Patentansprüche

1. Schaltschrank mit einem Rahmengestell, das einen aus Längs- und Tiefenstreben (30, 40) zusammengesetzten Sockel (20) und an diesen angeschlossene vertikale Rahmenschenkel (10) aufweist, wobei die Längs- und Tiefenstreben (30, 40) an ihren Enden eine Aufnahme bilden, in die die vertikalen Rahmenschenkel (10) eingesetzt und mit dem Sockel (20) zu einer Eckverbindung verschweißt sind, wobei die vertikalen Rahmenschenkel (10) Zentrierflächen (12.5) aufweisen, die an Anschlägen (36,46) der Längs- und Tiefenstreben (30,40) ausgerichtet sind, dadurch gekennzeichnet,
daß in vertikaler Richtung beabstandet von den Anschlägen (36,46) an den Längs- und Tiefenstreben (30,40) Stege (32,42) angeordnet sind, an denen sich der vertikale Rahmenschenkel (10) an seiner stirnseitigen , Stoßfläche (12.8) abstützt, und
daß der vertikale Rahmenschenkel (10) an der Stoßfläche (12.8) und an den Zentrierflächen (12.5) mit den Längs- und Tiefenstreben (30,40) verschweißt ist.

2. Schaltschrank nach Anspruch 1,
dadurch gekennzeichnet,
daß die Zentrierflächen (12.5) des vertikalen Rahmenschenkels (10) senkrecht zu den jeweils zugeordneten Seitenflächen des Rahmengestelles ausgerichtet sind, und
daß die Anschläge (36,46) stegartig ausgebildet zueinander im Winkel von 90° stehen und eine offene Aufnahme bilden.

3. Schaltschrank nach Anspruch 1,
dadurch gekennzeichnet,
daß der vertikale Rahmenschenkel (10) an seiner im Eckbereich nach außen weisenden Seite profiliert ist und
daß die Stege (32,42) eine an diese Profilierung angepaßte Ausklinkung aufweisen.

4. Schaltschrank nach einem der Ansprüche 1 oder 3,
dadurch gekennzeichnet,
daß die Anschläge (36,46) der Längs- und Tiefenstreben (30,40) an den Stirnseiten eines Deckelteils (37,47) gebildet sind und
daß sich über einen vertikalen Anlagesteg (31,41) der Steg (32,42) anschließt.

5. Schaltschrank nach einem der Ansprüche 1 bis 4,
dadurch gekennzeichnet,
daß an die Zentrierflächen (12.5) Seitenteile (12.4) des vertikalen Rahmenschenkels (10) angeschlossen sind und
daß die Seitenteile (12.4) in die Anlagestege (31,41) zur Bildung eines geschlossenen Dicht- und/oder Anlagerahmens für eine Seitenwand, Schaltschranktür oder dgl. übergehen.

6. Schaltschrank nach einem der Ansprüche 1 bis 5,
dadurch gekennzeichnet,
daß an den dem Sockel (20) abgekehrten Enden der vertikalen Rahmenschenkel (10) ein Deckelrahmen angeordnet ist, der in seiner Ausgestaltung dem Sockel (20) entspricht.

## Claims

1. Switchgear cabinet, provided with a framework which has a base (20), comprising longitudinal and depth bars (30,40), and vertical frame members (10) communicating with said base, the longitudinal and depth bars (30,40) forming at their ends receiving means in which the vertical frame members (10) are inserted and welded to the base (20) to form a corner joint, the vertical frame members (10) having centering faces (12.5) which are aligned with stop members (36,46) of the longitudinal and depth bars (30,40), characterised in that webs (32,42) are disposed on the longitudinal and depth bars (30,40) at a spacing in the vertical direction from the stop members (36,46), the vertical frame member (10) being supported at its front abutment face (12.8) on said webs, and in that the vertical frame member (10) is welded to the longitudinal and depth bars (30,40) at the abutment face (12.8) and at the centering faces (12.5).

2. Switchgear cabinet according to claim 1, characterised in that the centering faces (12.5) of the vertical frame member (10) are aligned perpendicularly relative to the respectively associated lateral faces of the framework, and in that the stop members (36,46) have a web-like configuration, lie at an angle of 90° relative to each other and form an open receiving means.

3. Switchgear cabinet according to claim 1, characterised in that the vertical frame member (10) is profiled on its side pointing outwardly in the corner region, and in that the webs (32,42) have a notch which is adapted to this profiling.

4. Switchgear cabinet according to one of claims 1 or 3, characterised in that the stop members (36,46) of the longitudinal and depth bars (30,40) are formed on the end faces of a cover portion (37,47), and in that the web (32,42) is attached via a vertical contact web (31,41).

5. Switchgear cabinet according to one of claims 1 to 4, characterised in that lateral portions (12.4) of the vertical frame member (10) communicate with the centering faces (12.5), and in that the lateral portions (12.4) extend into the contact webs (31,41) to form a closed sealing and/or contact frame for a lateral wall, switchgear cabinet door or the like.

6. Switchgear cabinet according to one of claims 1 to 5, characterised in that a cover frame is disposed on the ends of the vertical frame members (10) remote from the base (20) and corresponds, in respect of its configuration, to the base (20).

## Revendications

1. Armoire de distribution comportant une baie ou ossature d'encadrement. qui présente un socle (20) constitué d'entretoises de largeur et de profondeur (30, 40) ainsi que des montants d'encadrement verticaux (10) raccordés à ces entretoises, où les entretoises de largeur et de profondeur (30, 40) forment à leurs extrémités un logement de réception dans lequel peut être placé un montant d'encadrement vertical (10) qui est réuni au socle par un assemblage d'angle soudé, où chacun des montants d'encadrement verticaux (10) présente une surface de centrage (12.5), qui est parallèle à des butées (36, 46) des entretoises de largeur et de profondeur (30, 40),
caractérisée
en ce qu'à distance verticale des butées (35, 46), des nervures (32, 42) sont disposées sur les entretoises de largeur et de profondeur (30, 40), nervures sur lesquelles s'appuie par sa surface de butée frontale (12.8) le montant d'encadrement vertical (10), et
en ce que la surface de butée (12.8) et les surfaces de centrage (12.5) du montant d'encadrement vertical (10) sont réunies par soudage aux entretoises de largeur et de profondeur (30, 40).

2. Armoire de distribution suivant la revendication 1,
caractérisée
en ce que les surfaces de centrage (12.5) du montant d'encadrement vertical sont orientées perpendiculairement aux surfaces latérales associées de l'ossature d'encadrement, et
en ce que les butées (36, 48) en forme de nervures font entre elles un angle de 90° et constituent un logement de réception ouvert.

3. Armoire de distribution suivant la revendication 1,
caractérisée
en ce que le montant d'encadrement vertical (10) est profilé sur sa face qui dans la zone d'angle est tournée vers l'extérieur, et
en ce que les nervures (32, 42) présentent une entaille adaptée à ce profil.

4. Armoire de distribution suivant l'une ou l'autre des revendications 1 ou 3,
caractérisée en ce que les butées (36, 46) des entretoises de largeur et de profondeur (30, 40) sont formées sur les faces frontales d'un élément de couvercle (37, 47), et
en ce que la nervure (32, 42) se raccorde par l'intermédiaire d'une nervure d'application verticale (31, 41).

5. Armoire de distribution suivant l'une quelconque des revendications de 1 à 4,
caractérisée
en ce qu'aux surfaces de centrage (12.5) sont raccordés des éléments latéraux (12.4) du montant d'encadrement vertical (10), et
en ce que les éléments latéraux (12.4) se transforment en nervures d'application (31, 41) aux fins de la formation d'un cadre d'étanchéité et/ou d'application fermé à l'intention d'une paroi latérale, d'une porte d'armoire ou similaire.

6. Armoire de distribution suivant l'une quelconque des revendications de 1 à 5,
caractérisée
en ce que sur les extrémités des montants d'encadrement verticaux (10) qui ne sont pas orientées vers le socle (20) est disposé un cadre de couverture, dont la configuration correspond à celle du socle (20).
